# EUROPEAN PATENT APPLICATION

(11) **EP 1 507 397 A2**
(43) Date of publication of application: **16.02.2005**
(21) Application number: 04011975.2
(22) Date of filing: 19.05.2004
(51) Int. Cl.: H04M 11/06

(54) **DSL Modem apparatus and communication control method**

(30) Priority: 12.08.2003 JP 2003292672
(71) Applicant: MATSUSHITA ELECTRIC INDUSTRIAL CO., LTD., Kadoma-shi, Osaka 571-8501 (JP)
(72) Inventor: Noma, Nobuhiko, Yokohama-shi, Kanagawa 227-0033 (JP); Takagi, Genzo, Ageo-shi, Saitama 362-0047 (JP); Nagai, Motoyoshi, Yokohama-shi, Kanagawa 247-0008 (JP); Araki, Mitsuhiro, Kiyose-shi, Tokyo 204-0023 (JP); Atsuta, Akira, Tokyo 153-0064 (JP)
(74) Representative: Grünecker, Kinkeldey, Stockmair & Schwanhäusser Anwaltssozietät

(57) **Abstract**

The present invention provides a communication control method between DSL modem apparatuses mutually connected via a metallic cable. One of the DSL modem apparatuses transmits transmission data using a plurality of sub-carriers simultaneously, while the other DSL modem apparatus decodes the transmission data in the plurality of sub-carriers. The both sides of DSL modem apparatuses exchange data signals by mutually synchronizing and alternatively sharing transmission timeslots and reception timeslots, using the same range of sub-carriers. In addition, the upstream (data transmission from a remote side to a center side) uses the same range of carrier indexes that are used in the downstream (data transmission from the center side to the remote side).

## Description

### BACKGROUND OF THE INVENTION

### 1. Field of the Invention

The present invention relates to a DSL modem apparatus and communication control method that can be applied to digital communication using a metallic cable.

### 2. Description of Related Art

xDSL using a currently available telephone line allows high-speed communication employing high frequency signals. An ADSL method, one type of xDSL realizing the high-speed communication, employs a DMT (discrete multi tone) modulation method using a plurality of carriers (sub-carriers) in a wide frequency band.

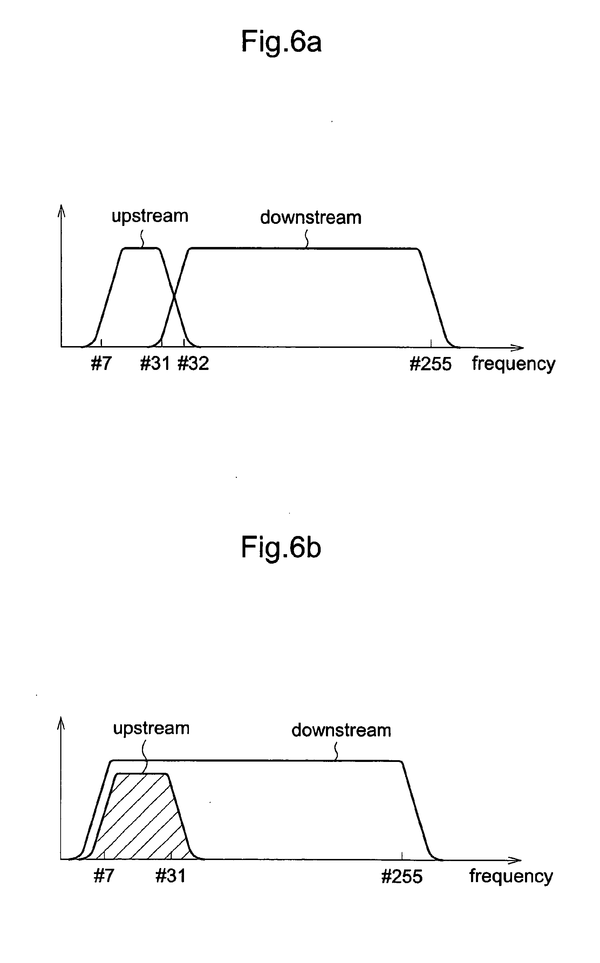

For example, G.992.1 (G.dmt), which is one of the ADSL standards, divides the frequency band ranging from 25kHz to 1.1MHz into 256 carriers (sub-carriers). Index number (#) is assigned to each sub-carrier, numbering from the low frequency carrier. As shown in Fig. 6 (a), sub-carriers #32 - #255 are generally used for a downstream, i.e., transmission from a center side (exchange side, ATU-C) to a remote side (user side, ATU-R). For upstream transmission from ATU-R to ATU-C, sub-carriers #7 - #31 are used. Further, in order to increase the speed of downstream communication, sub-carriers #7- #255 can be used as shown in Fig. 6 (b) (e.g., Related Art 1).

### [Related Art]

Japanese Translation of PCT International Application 2002-500855

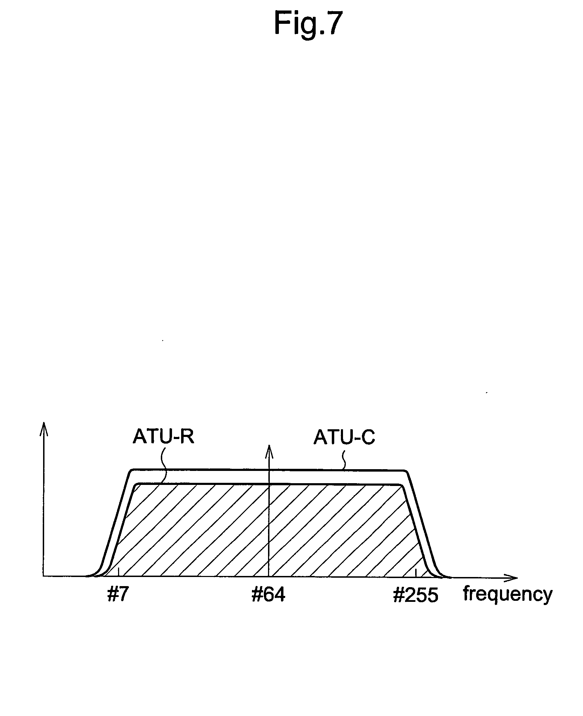

Similar to the downstream, sub-carriers #7- #255 can be used in order to increase the speed of upstream communication, as shown in Fig. 7. However, when there is a long distance (between ATU-R and ATU-C), the amplitude attenuation in the high frequency range becomes increased. Therefore, it becomes difficult to separate upstream signals from downstream signals, failing to provide the expected quality of communication speed.

### SUMMARY OF THE INVENTION

The present invention addresses the above-described problems. The purpose of the invention is to provide a DSL modem apparatus and communication control method that can perform a high-speed communication utilizing a wide range of frequency band, in upstream, similar to a downstream communication.

In this invention, carrier indexes used for the upstream have the similar range of the downstream. Also, the communication is performed in a time-division method dividing time for the upstream and downstream.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a schematic diagram of a communication system according to an embodiment of the present invention;
Fig. 2 is a functional block diagram of a transceiver shown in Fig. 1;
Fig. 3 (a) illustrates a spectrum of a downstream;
Fig. 3 (b) is a spectrum of an upstream;
Fig. 4 illustrates a time-division communication between ATU-C and ATU-R;
Fig. 5 is a sequence chart illustrating the handshake sequence and the first half of the initialization sequence;
Fig. 6 (a) illustrates carrier indexes used in the upstream and downstream according to G.dmt;
Fig. 6 (b) illustrates a state where carrier indexes used for the upstream overlap with the low frequency side of carrier indexes for the downstream; and
Fig. 7 illustrates a state where the exactly same carrier indexes are shared by upstream and downstream.

### DETAILED DESCRIPTION OF PREFERRED EMBODIMENTS

The embodiments of the present invention are explained in the following, in reference to the above-described drawings.

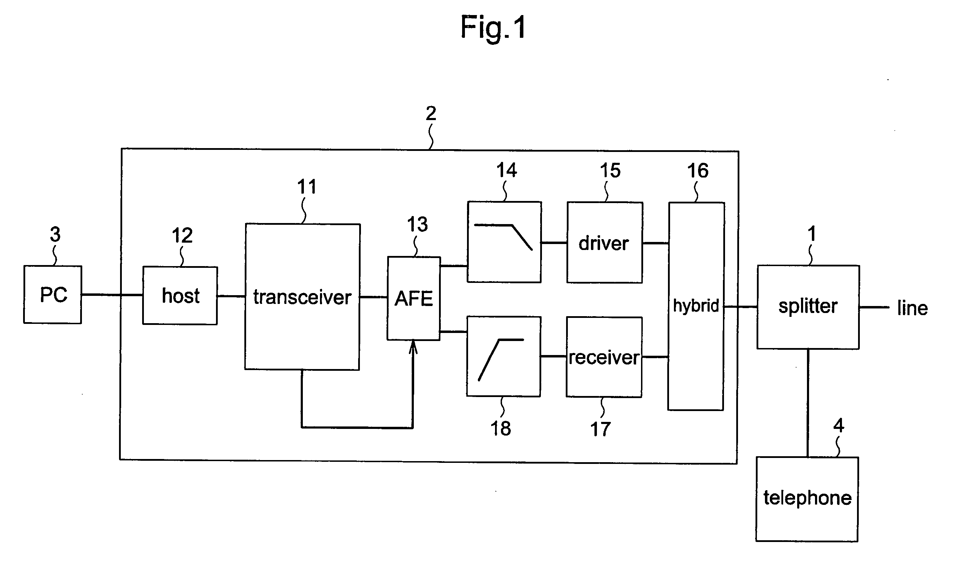

Fig. 1 illustrates a schematic configuration of a communication system of an ATU-R side, according to the present invention. In the communication system as illustrated in Fig. 1, a public phone line or a similar phone line (hereafter referred to as line) is connected to DSL modem apparatus 2 via splitter 1. Further, user terminal 3 is connected to DSL modem apparatus 2. When user terminal 3 and telephone 4 share one line, splitter 1 is necessary. However, when telephone 4 is not used, splitter 1 is not needed. It is also possible to have a configuration where user terminal 3 internally installs DSL modem apparatus 2.

DSL modem apparatus 2 includes transceiver 11 that executes DSL communication, and host 12 that controls the entire operation including the one of transceiver 11. At the line side of transceiver 11, units are configured with an analog circuit via analog front end (hereafter referred to as AFE) 13. Driver 15 is connected to a DA converter of AFE 13 via analog notch filter 14, so that an analog signal amplified by driver 15 is transmitted to the line via hybrid 16. The analog signal transmitted from the line is received by receiver 17 via hybrid 16, and then input into an AD converter of AFE 13 via analog filter 18. When sampling data is output from the AD converter, AFE 13 outputs the data to transceiver 11.

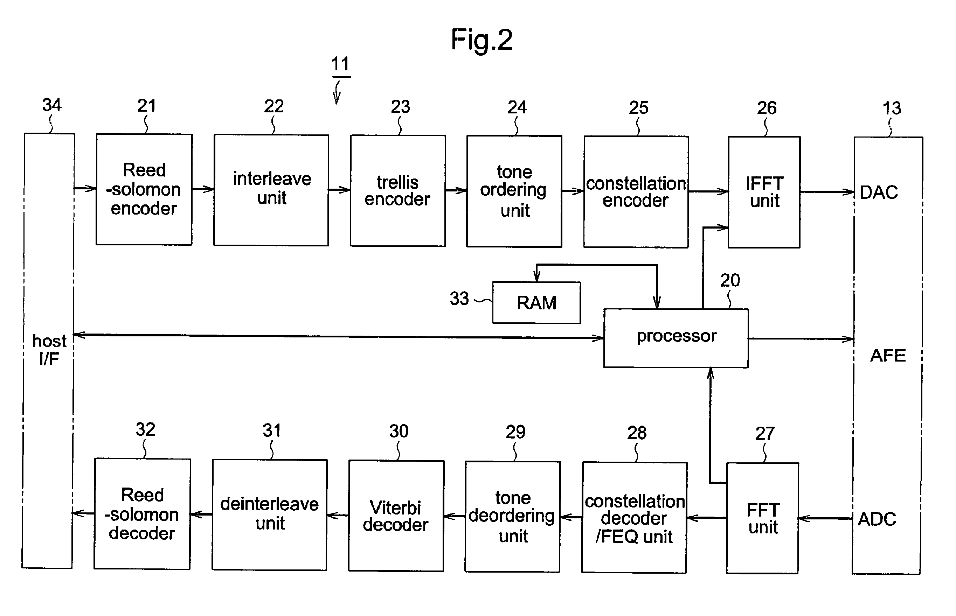

Fig. 2 is a functional block diagram illustrating transceiver 11. Processor 20 has functions to execute handshake and initialization sequences and to control communication during data transmission (SHOWTIME). Processor 20 also executes control of time-division communication, which is described later.

The transmission side of transceiver 11 includes Reed-Solomon encoder 21 that adds a redundancy bit for checking error, interleave unit 22 that sorts data to enable a burst error correction during Reed-Solomon decoding, trellis encoder 23 that performs data convolution from a trellis encoding, tone ordering unit 24 that lays out a bit number for each carrier, constellation encoder 25 that allocates topology of the transmission data on constellation coordinates, and IFFT unit 26 that performs an Inverse Fast Fourier Transform (hereafter referred to as IFFT) on data after the constellation encoding process.

The reception process side of transceiver 11 includes FFT unit 27 that performs a Fast Fourier Transform (hereafter referred to as FFT) on sampling data of the received signal, constellation decoder/FEQ unit 28 that decodes data from constellation data of the FFT output signal and corrects a topology on the constellation coordinates, tone de-ordering unit 29 that restores data assigned to each carrier after tone ordering process at the transmission side, Viterbi decoder 30 that performs Viterbi decoding on the received data, de-interleave unit 31 that restores data being resorted by the transmission side, and Reed-Solomon decoder 32 that deletes the redundancy bit added by the transmission side. RAM 33 is a work area of processor 20, which will be used for executing handshake and initialization sequences. Transceiver 11 is connected to host 12 via host interface (I/F) 34.

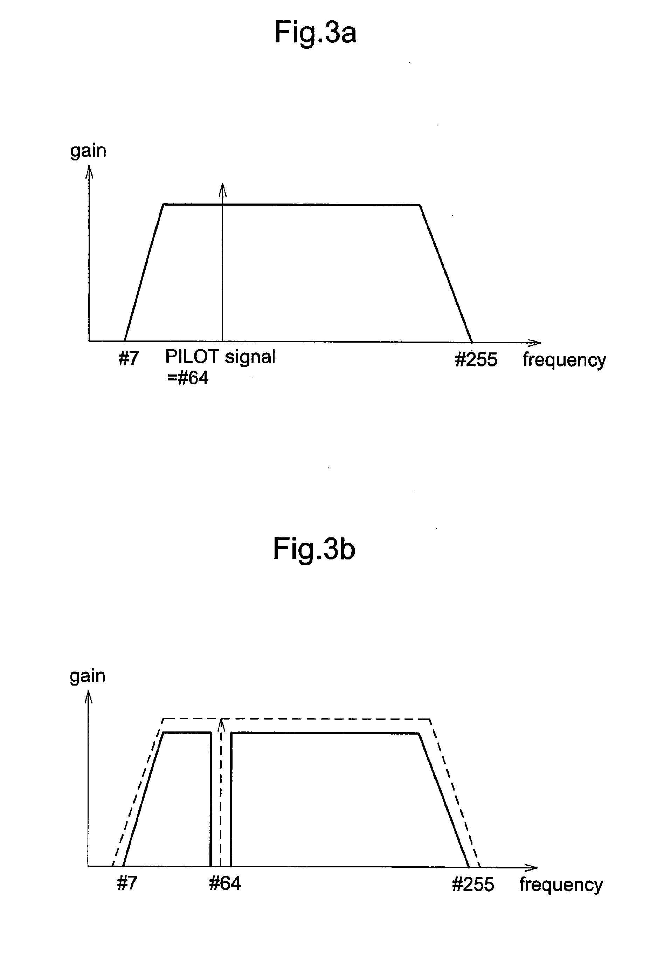

Hereafter, illustration of a communication method employed for the communication between ATU-C and ATU-R is provided. In the embodiment of the invention, the downstream data communication (ATU-C to ATU-R) uses sub-carriers #7 - #255, while the upstream data communication (ATU-C to ATU-R) uses sub-carriers #7 - #255 (excluding #64) as shown in Fig. 3 (a) and (b) respectively. In other words, the upstream and downstream communications use sub-carriers in the same range, except #64. As shown in Fig. 3 (b), data communication is not performed at #64, in the upstream. In this embodiment, #64 is assigned to a transmission of PILOT signals (C-PILOT1, C-PILOT2, C-PILOT3, etc.) in the downstream.

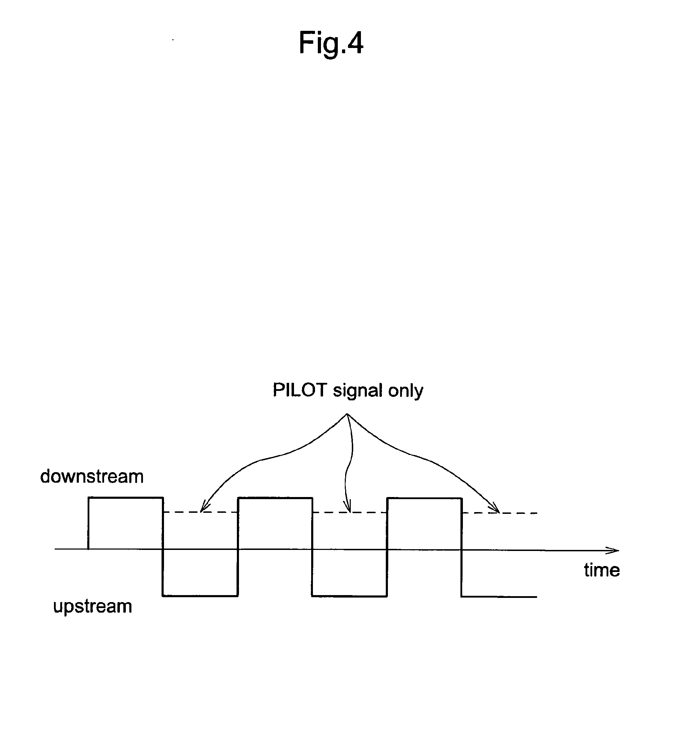

Further, in this embodiment, the upstream and downstream perform a time-division communication as shown in Fig. 4. In particular, in an assigned transmission timeslot for ATU-C, a reception timeslot is assigned to ATU-R. Conversely, in an assigned transmission timeslot for ATU-R, a reception timeslot is assigned to ATU-C. Therefore, transmission timeslots and reception timeslots are interchangeably provided.

In addition, ATU-R maintains synchronization based on PILOT signals transmitted by ATU-C. Therefore, as shown in Fig. 4, even in a transmission timeslot for ATU-R, ATU-C transmits the PILOT signals in a predetermined timing.

A DSL modem apparatus of the center side is connected to DSL modem apparatus 2 via a metallic cable. The DSL modem apparatus of the center side has the same configuration as DSL modem apparatus 2. When the center side is an exchange provided by a communication industry, telephone 4 does not exist.

The following provides a detail illustration of the operation of the above-configured embodiment.

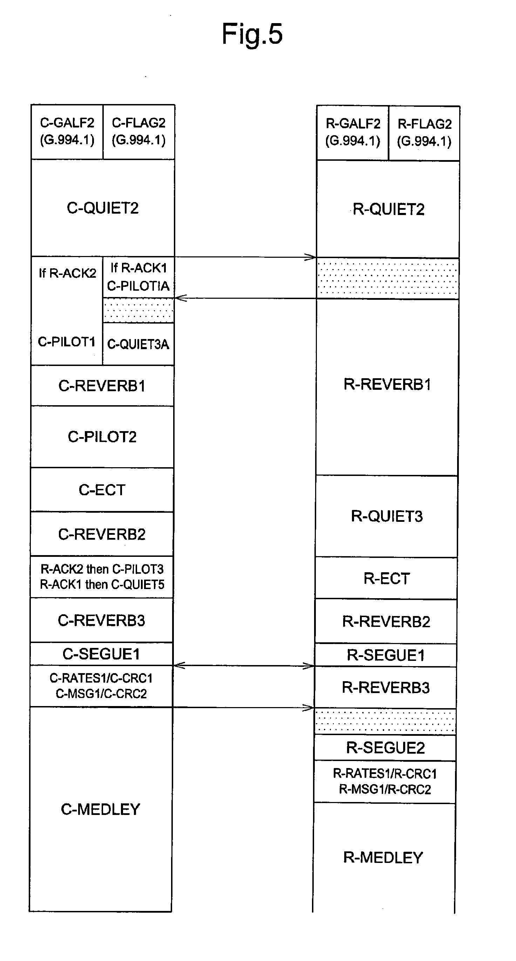

When the power of ATU-R is turned on, the sequence shown in Fig. 5 is executed. First, the handshake sequence based on G.944.1 is performed between ATU-C and ATU-R, in order to select a mode for the following initialization sequence.

In this example, both downstream and upstream sides select a mode for the time-division communication that uses carrier indexes #7 - #255.

Upon starting the initialization sequence, ATU-C uses index #64 to transmit C-PILOT 1 signal.

Upon starting the initialization sequence, and when ATU-R detects signal energy using index #64, synchronization of hyperframes is performed based on the PILOT signal. Upon establishing the hyperframe synchronization, both ATU-R and ATU-C switch to the time-division communication as shown in Fig. 4.

In a transmission timeslot for the upstream, ATU-R transmits R-REVERB 1 signal by using all sub-carriers from #7 - #255 (excluding #64) as shown in Fig. 3 (b). Thereafter, ATU-R performs communication using all sub-carriers from #7 - #255 (excluding #64), in transmission timeslots for the upstream.

Upon detecting the R-REVERB1 signal, ATU-C transmits C-REVERB1 signal to the remote side, using all sub-carriers from #7 - #255 as shown in Fig. 3 (a). Thereafter, ATU-C performs communication using all sub-carriers from #7 - #255, in transmission timeslots for the downstream.

In addition, upon detecting the R-REVERB1 signal, ATU-C sequentially transmits C-REVERB1, C-PILOT2, C-ECT, and C-REVERB2 for a predetermined number of symbols.

Based on C-REVERB1 or C-REVERB2, ATU-R performs symbol synchronization.

Upon transmitting C-REVERB3, ATU-C transmits C-SEGUE1, while, upon transmitting R-REVERB2, ATU-R transmits R-SEGUE1 for a plurality of symbols. Thereafter, cyclic prefix data is added to each symbol, since important signals are exchanged that determine parameters during the SHOWTIME. Thus, a RATES signal and an MSG signal with cyclic prefix data are transmitted in order to determine various communication parameters by exchanging communication speed, encoding parameter, and tone-ordering information. Although the following sequence is omitted, both sides confirm the determination of the communication parameters and perform data communication (SHOWTIME).

Further, at the same timing of R-ECT, ATU-R performs an echo canceller learning. As shown in Fig. 5, when ATU-R is in the period of R-ECT, ATU-C stops the transmission of C-REVERB2 signal and transmits C-PILOT3 using sub-carrier #64.

During the R-ECT period, ATU-R performs the echo canceller learning for the all sub-carriers used during the SHOWTIME. In this embodiment, the upstream uses the same sub-carriers #7 - #255 as the downstream. Therefore, processor 20 generates a training signal (transmission data) carried by sub-carriers #7 - #255, and inputs the training signal into IFFT unit 26. However, transmission data to be carried by sub-carrier #64 (frequency location of the PILOT signal) is not generated.

Echo canceller learning is a process that detects a difference between the training signal (transmitted by its own apparatus) and its echo signal, finds an appropriate coefficient that can convert transmission data into the echo signal, based on the detection result, and sets the coefficient. The echo canceller does not need to be used since the following communication is also time-division communication, except the PILOT signals.

According to the present embodiment, after establishing the synchronization between ATU-C and ATU-R, communication is performed in the time-division method that alternately shifts to a transmission timeslot from a reception timeslot. Therefore, even if communication is performed using the same carrier indexes for both the upstream and downstream, the upstream and downstream signals can be divided by time, thereby preventing the signal interference from both sides. Since the upstream communication band (number of sub-carriers) can be expanded into the same communication band as the downstream, the communication speed can be increased.

The above illustration has used an example that selects the time-division communication mode during the handshake sequence. However, it is possible to have a configuration that selects the time-division communication mode during the initialization sequence. For example, the time-division communication method can be selected when a reception level of the signals (exchanged during the initialization sequence) is smaller than a threshold value. When it is not, a normal DSL communication (e.g., G.dmt) can be selected. Or, a communication using an echo canceller can be performed.

Further, the above illustration incorporates a notch filer in the remote transmission side at the frequency location of the PILOT signal, the signal being transmitted from the center side. However, when there are other specific signals that should not be stopped during the echo canceller learning at the remote side, a notch filter can be provided at the frequency location of such specific signals, so that the echo canceller learning can be performed without the effect of the hybrid echo of such signals.

Furthermore, the above illustration used a DSL modem that adheres to G.dmt as an example. However, the present invention can be applied to other types of xDSL modems.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

This application is based on the Japanese Patent Application No. 2003-292672 filed on August 12, 2003, entire content of which is expressly incorporated by reference herein.

## Claims

1. A DSL modem apparatus comprising:
a transmitter that transmits a data signal to an opposing communication apparatus;
a receiver that receives a data signal from the opposing communication apparatus; and
a control unit that alternatively switches between a transmission timeslot and a reception timeslot by mutually synchronizing with the opposing communication apparatus, and controls transmission and reception timings in order to transmit a data signal from said transmitter during a transmission timeslot and to receive a data signal at said receiver during a reception timeslot.

2. The DSL modem apparatus according to claim 1, wherein the DSL modem apparatus is a remote side DSL modem apparatus that periodically receives a PILOT signal from a center side and maintains symbol synchronization, and wherein the DSL modem apparatus uses a range of carrier indexes for an upstream, the range being the same as one being used for a downstream, the upstream being data transmission from the remote side to the center side, the downstream being data transmission from the center side to the remote side.

3. The DSL modem apparatus according to claim 2, wherein a PILOT signal in the downstream is received and processed even during a transmission timeslot.

4. A communication control method comprising:
alternatively switching between a transmission timeslot and a reception timeslot by mutually synchronizing with an opposing DSL modem apparatus;
transmitting a data signal to the opposing DSL modem apparatus during a transmission timeslot; and
receiving a data signal from the opposing DSL modem apparatus during a reception timeslot.

5. A communication control method between DSL modem apparatuses mutually connected via a metallic cable, the method comprising:
transmitting transmission data from one DSL modem apparatus using a plurality of sub-carriers simultaneously; and
decoding the transmission data in the plurality of sub-carriers by the other DSL modem apparatus,
wherein a transmission timeslot and a reception timeslot are alternatively switched when both DSL modem apparatuses mutually synchronize, and data signals are mutually exchanged by using the same range of sub-carriers.
